Europäisches Patentamt

European Patent Office

Office européen des brevets

(19)

(11) Veröffentlichungsnummer: **0 072 402**
**B1**

(12) **EUROPÄISCHE PATENTSCHRIFT**

(45) Veröffentlichungstag der Patentschrift:
19.03.86

(21) Anmeldenummer: 82105445.9

(22) Anmeldetag: 22.06.82

(51) Int. Cl.⁴: **B 23 K 31/00,** B 21 C 37/30,
F 16 L 13/02

(54) Verfahren und Vorrichtung zum Beheben bzw. Verringern des Kantenversatzes bei der Verbindung von Rohrkörpern über sich gegenüberstehende Stirnenden durch Schweissen.

(30) Priorität: 27.06.81 DE 3125435

(43) Veröffentlichungstag der Anmeldung:
23.02.83 Patentblatt 83/8

(45) Bekanntmachung des Hinweises auf die Patenterteilung:
19.03.86 Patentblatt 86/12

(84) Benannte Vertragsstaaten:
AT BE CH FR GB IT LI LU NL SE

(56) Entgegenhaltungen:
DE - C - 108 588
FR - A - 695 339
GB - A - 1 201 693
US - A - 3 594 894

(73) Patentinhaber: Emil Wolff Maschinenfabrik und Eisengiesserei GmbH, Wolfsbankring 38,
D-4300 Essen 11 (DE)

(72) Erfinder: Exner, Walter, Karlbader Strasse 3,
D-4350 Recklinghausen (DE)
Erfinder: Hoebusch, Wolfgang, Longbentonstrasse 62,
D-4353 Oer-Erkenschwick (DE)

(74) Vertreter: Honke, Manfred, Dr. et al, Patentanwälte Andrejewski, Honke & Partner
Theaterplatz 3 Postfach 10 02 54, D-4300 Essen 1 (DE)

## Beschreibung

Die Erfindung bezieht sich gattungsgemäß auf ein Verfahren zum Beheben bzw. Vermeiden eines störenden Kantenversatzes an stoßenden Stirnflächen von mit Hilfe einer Schweißnaht zu verbindenden Rohrenden, wobei jeweils eines der Rohrenden auf einen mit einem Preßstempel verbundenen Kalibrierdorn aufgeschoben und dabei die Stirnfläche des Rohrendes an einem den Kalibrierdorn umgebenden Stirnflächenformteil durch Stauchpressung mit einer Schweißnaht-Formausbildung versehen wird. Die Erfindung bezieht sich fernerhin auf eine Vorrichtung zur Durchführung eines solchen Verfahrens mit Preßstempel, an den Preß-stempel angeschlossenem Kalibrierdorn und den Kalibrierdorn umgebendem Stirnflächenformteil zur Anformung einer Schweißnaht-Formausbildung.

Bei den bekannten gattungsgemäßen Maßnahmen (FR-A-695 339) wird mit einem einzigen Werkzeug, nämlich mit einem Werkzeug des vorstehend beschriebenen Aufbaus gearbeitet. Das Rohrende erfährt folglich nur eine zweifache Formgebung, nämlich einerseits an der Stirnfläche und andererseits an der Innenfläche. Das Rohrende bleibt beim Aufschieben auf den Kalibrierdorn sowie beim Stauchpressen an dem Stirnflächenformteil umfangsmäßig unbeeinflußt. Die Verformung ist umfangsmäßig nicht kontrolliert. Insoweit findet auch eine Behebung eines störenden Kantenversatzes nicht statt.

Grundsätzlich ist es bekannt (DE-C- 108 588), beim Stauchpressen der Enden von Kesselrohren auch den Rohrumfang festzulegen und folglich eine dreifache Formgebung an Innen-, Stirn- und Außenfläche des Rohrendes vorzunehmen. Dazu wird mit einem entsprechend ausgebildeten Werkaggregat gearbeitet. Dieses Werkzeug besteht aus zwei Formhälften mit entsprechenden, dem zu verformenden Rohrende angepaßten Halbformen, in die ein Preßstempel einfährt, wobei im Bereich des Verformungsvorganges die Halbformen eine Aufweitung aufweisen, an die beim Stauchpressen der Außenumfang des sich aufstauchenden Rohrendes zur Anlage kommt, Hier sind drei Formwerkzeuge, nämlich zwei Matrizen und ein Preßstempel erforderlich, was aufwendig ist.

Der Erfindung liegt die Aufgabe zugrunde, das gattungsgemäße Verfahrenso zu führen, daß auch eine umfangsseitige Kontrolle des Verformungsvorganges beim Stauchpressen stattfindet und folglich ein störender Kantenversatz auch in bezug auf den Außenumfang vermieden wird. Der Erfindung liegt fernerhin die Aufgabe zugrunde, ein Werkzeug anzugeben, welches für das erfindungsgemäße Verfahren besonders geeignet ist.

Zur Lösung dieser Aufgabe lehrt die Erfindung, daß das Rohrende in einen Hohlzylinder eingeführt wird, der an das Stirnflächenformteil anschließt, und daß das Rohrende bei der Stauchpressung in dem Hohlzylinder kalibriert wird. Die Vorrichtung zur Durchführung des erfindungsgemäßen Verfahrens schließt an die eingangs beschriebene Aus-führungsform an und ist dadurch gekennzeichnet, daß der Kalibrierdorn von einem in dem Prefstempel ausgebildeten Hohlzylinder umgeben ist, der an das Stirnflächenformteil anschließt.

Die erreichten Vorteile sind darin zu sehen, daß mit einem einzigen Formwerkzeug gearbeitet werden kann, obgleich eine dreifache Formgebung an Innen-, Stirn- und Außenflächen des jeweiligen Rohrendes erfolgt.

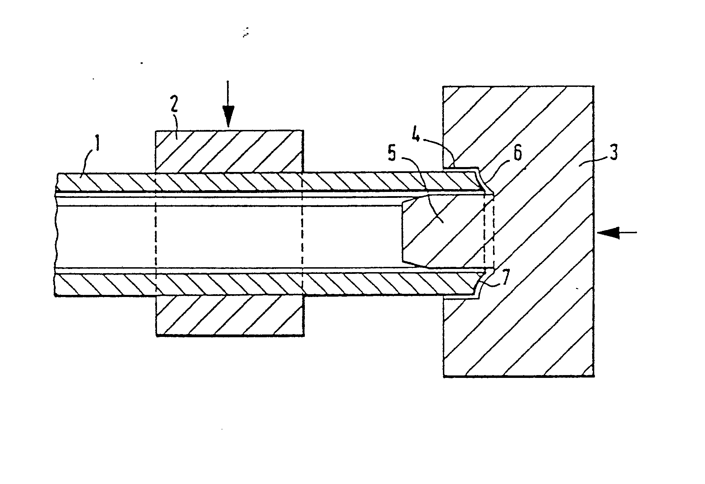

Die Zeichnung veranschaulicht schematisch eine Ausführungsform der Vorrichtung zur Durchführung des Verfahrens. Das Rohrende, das beispielsweise einer Verformung durch Stauchpressen in der Längsrichtung unterworfen werden soll, ist mit 1 bezeichnet. Es wird zwischen hydraulisch zu betätigenden Spannbacken 2 eingespannt. In der Längsrichtung des eingespannten Rohrendes 1 verschiebbar ist der Preßstempel 3 vorgesehen. In der dem Rohrende 1 zugewandten Seite des Preßstempels 3 achsgleichen Hohlzylinders 4 vorgesehen, der einen dem Außen-durchmesser des Rohrendes 1 gleichen bzw. unter Belassung von etwas Spiel etwa gleichen Innendurchmesser aufweist. In dem Hohlzylinder 4 befindet sich am Preßstempel 3 ein Kalibrierdorn 5, dessen Außendurch-messer durch den Innendurchmesser des Rohrendes 1 bestimmt ist. Der Kalibrierdorn 5 steht vom Preßstempel 3 vor. Ein an den Hohlzylinder 4 anschließendes Stirnflächenformteil 6 hat eine durch die zu ziehende Schweißnaht bedingte Form, vorliegendenfalls für eine Tulpenschweißnaht die Form eines halben Tulpenkelches. Beide einander zugewandten Rohrenden 1 an einer Verbindungsstelle können der erfindungsgemäßen Behandlung unterworfen werden. Das Stauchpressen der Rohrenden 1 erfolgt in der Wärme, d. h. bei auf Verformungstemperatur gebrachten Rohrenden 1.

## Patentansprüche:

1. Verfahren zum Beheben bzw. Vermeiden eines störenden Kantenversatzes an stoßenden Stirnflächen von mit Hilfe einer Schweißnaht zu verbindenden Rohrenden (1), wobei jeweils eines der Rohrenden (1) auf einen mit einem Preßstempel (3) verbundenen Kalibrierdorn (5) aufgeschoben und dabei die Stirnfläche des Rohrendes (1) an einem den Kalibrierdorn (5) umgebenden Stirnflächenformteil (6) durch Stauchpressung mit einer Schweißnaht-Formausbildung versehen wird, dadurch gekennzeichnet, daß das Rohrende (1) in einen Hohlzylinder (4) eingeführt wird, der an das Stirnflächenformteil (6) anschließt, und daß das Rohrende (1) bei der Stauchpressung in dem Hohlzylinder (4) kalibriert wird.

2. Vorrichtung zur Durchführung des Verfahrens nach Anspruch 1 mit Preßstempel (3), an den Preßstempel (3) angeschlossenem Kalibrierdorn (5) und den Kalibrierdorn (5) umgebendem Stirnflächenformteil (6) zur Anformung einer Schweißnaht-Formausbildung, dadurch gekennzeichnet, daß der Kalibrierdorn (5) von einem in dem Preßstempel (3) ausgebildeten Hohlzylinder (4) umgeben ist, der an das Stirnflächenformteil (6) anschließt.

## Claims

1. A process for the elimination or avoidance of troublesome edge displacement on the impacting faces of tube ends (1) that are to be joined together by means of a welded seam, in which each of the tube ends (1) is pushed on to a sizing plug (5) combined with a press die (3) and thereby the face of the tube end (1) is provided with a profile for the welding seam by compression against an end face shaped part (6) surrounding the sizing plug (5), characterized in that the tube end (1) is introduced into a hollow cylinder (4) that is adjacent to the face shaped part (6) and that the tube end (1) is sized by compression in the hollow cylinder (4).

2. Equipment for carrying out the process according to Claim 1, with a press die (3), a sizing plug (5) attached to the press die (3), and an end face shaped part (6) surrounding the sizing plug (5) to form a profile for the welding seam, characterized in that the sizing plug (5) is surrounded by a hollow cylinder (4), formed in the press die (3), that is adjacent to the end face shaped part (6).

## Revendications:

1. Procédé pour supprimer ou éviter une position désaxée nuisible des bords au niveau de surfaces frontales en aboutement d'extrémités (1) de tubes, devant être réunies à l'aide d'un cordon de soudure et selon lequel on emmanche l'une des extrémités (1) de tubes sur une broche de calibrage (5) reliée à un poinçon de compression (3) et on aménage sur la surface frontale de l'extrémité (1) du tube une configuration correspondant à la forme d'un cordon de soudure, par déformation par compression de ladite face frontale contre une pièce de forme (6) servant au formage de la surface frontale du tube et qui entoure la broche de calibrage (5), caractérisé en ce qu'on introduit l'extrémité (1) du tube dans un cylindre creux (4) qui se raccorde à la pièce du forme (6) réalisant le formage de la surface frontale, et que l'extrémité (1) du tube est calibrée par déformation par compression dans le cylindre creux (4).

2. Dispositif pour la mise en oeuvre du procédé selon la revendication 1, comportant un poinçon de compression (3), une broche de calibrage (5) raccordée au poinçon de compression (3) et une pièce de forme (8) servant au formage de la face frontale du tube et entourant la broche d'étanlonnage (5) et servant au formage d'une configuration correspondant à la forme d'un cordon de soudure, caractérisé par le fait que la broche de calibrage (5) est entourée par un cylindre creux (4) qui est ménagé dans le poinçon de compression (3) et qui se raccorde à la pièce de forme (6).